# EUROPEAN PATENT SPECIFICATION

(11) **EP 4 082 828 B1**
(45) Date of publication and mention of the grant of the patent: **10.07.2024**
(21) Application number: 21171052.0
(22) Date of filing: 28.04.2021
(51) Int. Cl.: B60N 2/07

(54) **A SEAT RAIL SYSTEM FOR A VEHICLE, A VEHICLE COMPRISING A SEAT RAIL SYSTEM, AND A METHOD FOR ASSEMBLING PARTS OF A SEAT RAIL SYSTEM**
SITZSCHIENENSYSTEM FÜR EIN FAHRZEUG, FAHRZEUG MIT EINEM SITZSCHIENENSYSTEM UND VERFAHREN ZUM ZUSAMMENBAU VON TEILEN EINES SITZSCHIENENSYSTEMS
SYSTÈME DE RAIL DE SIÈGE POUR VÉHICULE, VÉHICULE COMPRENANT UN SYSTÈME DE RAIL DE SIÈGE, ET PROCÉDÉ D'ASSEMBLAGE DE PIÈCES D'UN SYSTÈME DE RAIL DE SIÈGE

(43) Date of publication of application: 02.11.2022
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: JONSSON, Tony, 441 91 Alingsås (SE)
(74) Representative: Zacco Sweden AB

(56) References cited:
- DE-A1- 10 210 555
- DE-A1- 102013 205 096
- DE-B3- 102016 217 843

## Description

### TECHNICAL FIELD

The present invention relates to a seat rail system for a vehicle. The seat rail system comprises an upper rail and a stationary lower rail attached to a floor structure of the vehicle. The upper rail is configured for being attached to a vehicle seat and the upper rail is movably arranged in relation to the lower rail in a longitudinal vehicle direction. The disclosure further relates to a vehicle comprising a seat rail system, and a method for assembling parts of a seat rail system.

### BACKGROUND

Vehicle seats are commonly arranged with a seat rail system for a mechanical sliding connection between the vehicle seat and a floor structure of the vehicle. Conventional seat rail systems comprise a pair of two interconnected rails that are linearly slidable relative to each other, where a lower rail is stationary attached to the floor structure and an upper rail is fastened to the vehicle seat. With the seat rail systems, the vehicle seat is adjustable in a longitudinal vehicle direction for a convenient positioning of the vehicle seat. Traditional seat rail systems commonly have complex load paths from the floor structure to the vehicle seat, which is negative when the seat rail system is exerted to forces in a vehicle impact event. The complex load paths are resulting in heavy and costly constructions of the seat rail systems to achieve desired performance. This is especially of concern if the vehicles are equipped with vehicle seats having integral seat belt systems only connected to the vehicle seats, where all impact forces need to be absorbed by the vehicle seat construction. A common issue with seat rail systems is unwanted and disturbing rattle noise from the parts involved. There is thus a need for an improved seat rail system having the ability to absorb load in vehicle impact events efficiently for improved safety of vehicle occupants, where the seat rail system is fulfilling legal requirements, is lightweight in construction, and is having a low cost design. The seat rail system should also have improved noise, vibration, and harshness properties (NVH properties).

Patent publication DE 102013205096 A1 discloses a longitudinal adjuster for a car seat. The adjuster has a bottom rail and an upper rail displaceably guided in a longitudinal direction. A seat frame side part is connected with the upper rail. A clamping element is provided with first and second lower locking portions. The side part is provided with first and second upper locking portions. The first lower locking portion and the first upper locking portion are connected with and separated from each other during in event of crash. Forces occurring in event of crash are introduced from the side part via a clip element to a vehicle structure.

### SUMMARY

An object of the present invention is to provide a seat rail system for a vehicle, a vehicle comprising a seat rail system, and a method for assembling parts of a seat rail system, where the previously mentioned problems are avoided. This object is at least partly achieved by the features of the independent claims. The dependent claims contain further developments of the seat rail system and the method for assembling parts of a seat rail system.

The invention concerns a seat rail system for a vehicle. The seat rail system comprises an upper rail and a stationary lower rail attached to a floor structure of the vehicle. The upper rail is configured for being attached to a vehicle seat and the upper rail is movably arranged in relation to the lower rail in a longitudinal vehicle direction. The seat rail system further comprises an elongated load member attached to the lower rail. An upper part of the load member is extending into a lower portion of the upper rail. One or more lower parts of the load member are extending through the floor structure. A lower base surface of the lower rail comprises one or more first wedge elements and an upper surface of the floor structure comprises one or more corresponding second wedge elements. The one or more first wedge elements and the corresponding one or more second wedge elements are configured for interacting with each other for establishing a clamping action between the one or more lower parts and a lower surface of the floor structure.

Advantages with these features are that a strong construction is achieved, which efficiently can capture and absorb emerging impact forces in a vehicle impact event through engagement of the load member with the floor structure and the upper rail. The construction is preventing large deformations of the rails, which is especially important when the vehicles are equipped with vehicle seats having integral seat belt systems only connected to the vehicle seats, where all impact forces need to be absorbed by the vehicle seat construction. The clamping action is establishing a pre-tensioning of the system, which is reducing problems with unwanted rattle noise. Through the clamping action, the NVH properties of the seat rail system are highly improved.

According to an aspect of the invention; the one or more lower parts of the load member are extending through corresponding openings of the floor structure. The openings have narrowing configurations. The extension of the lower parts through the openings is securing a firm engagement between the load member and the floor structure in the vehicle impact event. The openings are further simplifying the mounting of the lower rail to the floor structure. The narrowing configurations of the openings are securing the clamping action between the one or more lower parts and the lower surface of the floor structure.

According to another aspect of the invention, the one or more first wedge elements are arranged on laterally opposite sides of the one or more lower parts. This arrangement is securing a stable positioning of the lower rail to the floor structure.

According to an aspect of the invention, the one or more first wedge elements are extending in a downwards direction from the lower base surface. The one or more corresponding second wedge elements are extending in an upwards direction from the upper surface. Through the different extensions of the wedge elements, the lower rail can be pushed a small distance upwards from the floor structure during mounting of the lower rail for establishing the clamping action.

According to another aspect of the invention, the one or more lower parts comprise laterally extending lower flanges. The lower flanges are configured for establishing the clamping action with the lower surface. The lower flanges are configured for interacting with the lower surface of the floor structure for a secure positioning of the lower rail.

According to a further aspect of the invention, the seat rail system further comprises one or more reinforcement plate structures arranged between the lower surface and one or more of the lower flanges. The lower flanges are configured for establishing the clamping action with the lower surface via the one or more reinforcement plate structures. The reinforcement plates are establishing a strong connection between the parts of the seat rail system.

According to an aspect of the invention, the one or more reinforcement plate structures comprise one or more lower plate sections arranged below one or more of the lower flanges. The lower plate sections are establishing a simple positioning of the lower rail when mounted to the floor structure.

According to another aspect of the invention, the seat rail system further comprises a mounting bracket connected to the lower rail and a mounting element connected to the floor structure. The mounting bracket is attached to the mounting element via a fastening element. The mounting bracket and the mounting element are configured for positioning the one or more first wedge elements and the one or more corresponding second wedge elements in contact with each other for establishing the clamping action between the one or more lower parts and the lower surface. The mounting bracket, the mounting element, and the fastening element, are simplifying the positioning of the lower rail to the floor structure when mounting the seat rail system. The parts are further holding the lower rail in position to the floor structure when mounted.

According to a further aspect of the invention, the upper part comprises a laterally extending upper flange. The lower portion of the upper rail has a bell-shaped cross-sectional configuration forming a cavity. The cavity is configured for embracing the upper flange. The upper flange is configured for being directly in engagement with the lower portion in a vehicle impact event for establishing a load path from the floor structure to the upper rail via the load member. The cavity is arranged around the upper flange of the load member for a simple and robust connection between the lower portion and the load member. The cavity is further allowing a longitudinal displacement of the upper rail in relation to the lower rail in normal operating conditions for positioning the vehicle seat, without any interaction between the load member and the lower portion. The load path from the floor structure to the upper rail via the load member is preventing large deformations of the rails through the anchoring of the upper rail to the floor structure via the load member. The simple and efficient construction of the seat rail system with the load member is providing a straight symmetrical load path all the way from the floor structure to the vehicle seat via the upper rail, allowing a compact construction of the system with low height and low weight at a low cost. Through the interaction between the floor structure and the upper rail via the load member, forces are efficiently built up in the system in the vehicle impact event for a high system stiffness that is preventing large deformations.

According to an aspect of the invention, the upper rail comprises a first side section and a second side section joined to each other. The cavity is formed between the first side section and the second side section. The first side section comprises a lateral inwardly projecting first flange and the second side section comprises a lateral inwardly projecting second flange. The first flange and the second flange are configured for being in engagement with the upper flange in the vehicle impact event. The side sections are providing a simple construction of the upper rail, where the cavity is formed by the joined side sections. The side sections may be constituted by welded sheet metal parts that are forming the cavity, the first flange, and the second flange.

According to another aspect of the invention, the floor structure is an integrated structural part of a body-in-white structure of the vehicle. With the integrated floor structure, a strong construction of the system is achieved for efficiently absorbing loads in the vehicle impact event.

The invention further concerns a vehicle comprising the seat rail system described above.

The invention further concerns a method for assembling parts of a seat rail system for a vehicle. The seat rail system comprises an upper rail and a stationary lower rail attachable to a floor structure of the vehicle. The upper rail is configured for being attached to a vehicle seat and the upper rail is movably arranged in relation to the lower rail in a longitudinal vehicle direction. The seat rail system further comprises an elongated load member attached to the lower rail. The elongated load member comprises an upper part having a laterally extending upper flange and one or more lower parts having laterally extending lower flanges. A lower base surface of the lower rail comprises one or more first wedge elements and an upper surface of the floor structure comprises one or more corresponding second wedge elements. The method comprises the steps: arranging the lower rail in connection to the floor structure in a position where the one or more lower parts are facing corresponding openings of the floor structure, where the openings have narrowing configurations; pushing the lower rail in a downwards direction towards the floor structure for positioning the one or more lower parts through the corresponding openings of the floor structure, where the lower flanges are extending below a lower surface of the floor structure; sliding the lower rail in relation to the floor structure in the longitudinal vehicle direction for establishing interaction between the one or more first wedge elements and the corresponding one or more second wedge elements, where upon interaction between the one or more first wedge elements and the corresponding one or more second wedge elements a clamping action is established between one or more lower flanges and the lower surface in connection to narrow sections of the openings. Advantages with these features are that a strong construction is achieved through the assembling of the system, which construction efficiently can capture and absorb emerging impact forces in a vehicle impact event through engagement of the load member with the floor structure and the upper rail. The clamping action is establishing a pre-tensioning of the system, which is reducing problems with unwanted rattle noise. Through the clamping action, the NVH properties are highly improved.

According to an aspect of the invention, the seat rail system further comprises a mounting bracket connected to the lower rail and a mounting element connected to the floor structure. The method further comprises the steps: connecting the mounting bracket to the mounting element with a fastening element after pushing the lower rail in the downwards direction towards the floor structure; and sliding the lower rail in relation to the floor structure in the longitudinal vehicle direction through action from the fastening element, where the sliding movement of the lower rail in relation to the floor structure is positioning the one or more first wedge elements and the one or more corresponding second wedge elements in contact with each other for establishing the clamping action between one or more lower flanges and the lower surface. The mounting bracket, the mounting element, and the fastening element, are simplifying the positioning of the lower rail to the floor structure when mounting the seat rail system. The parts are further holding the lower rail in position to the floor structure when mounted.

According to another aspect of the invention, the seat rail system further comprises one or more reinforcement plate structures arranged between the lower surface and one or more of the lower flanges. The method further comprises the step: establishing the clamping action between one or more lower flanges and the lower surface via the one or more reinforcement plate structures. The reinforcement plates are establishing a strong connection between the parts of the seat rail system in the vehicle impact event.

### BRIEF DESCRIPTION OF DRAWINGS

The disclosure will be described in detail in the following, with reference to the attached drawings, in which
- Fig. 1: shows schematically, in a side view, a vehicle with a seat rail system having an upper rail attached to a vehicle seat and a lower rail attached to a floor structure, according to the invention,
- Fig. 2: shows schematically, in a perspective view from above, the seat rail system, according to the invention,
- Fig. 3: shows schematically, in an exploded perspective view, the seat rail system, according to the invention,
- Fig. 4: shows schematically, in a cross-sectional front view, the seat rail system, according to the invention,
- Fig. 5a-c: show schematically, in perspective views from above, the lower rail of the seat rail system in different mounting positions in relation to the floor structure, according to the invention,
- Fig. 6: shows schematically, in a perspective view from below, the lower rail of the seat rail system and the floor structure, according to the invention,
- Fig. 7: shows schematically, in a perspective view from above, the seat rail system with a drive mechanism, according to the invention,
- Fig. 8: shows schematically, in a cross-sectional front view, the seat rail system with a reinforcement plate structure, according to an alternative embodiment of the invention, and
- Fig. 9: shows schematically, in a cross-sectional front view, the seat rail system with a reinforcement plate structure, according to a further alternative embodiment of the disclosure.

### DESCRIPTION OF EXAMPLE EMBODIMENTS

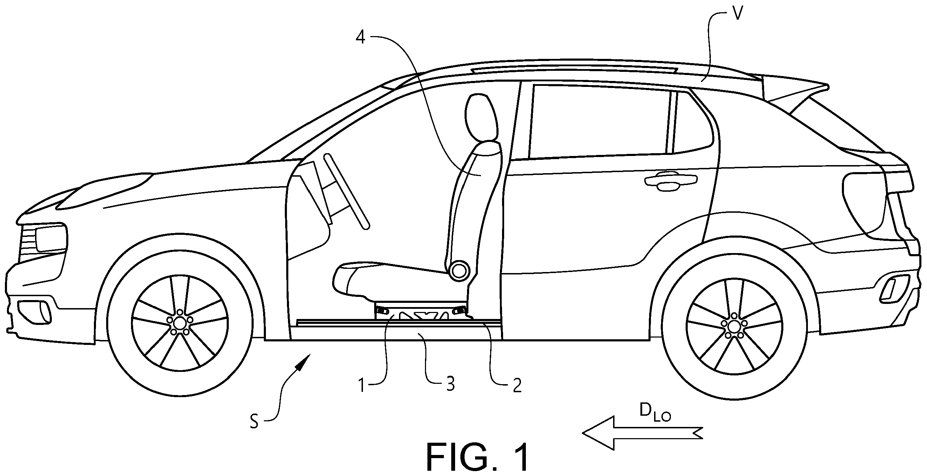

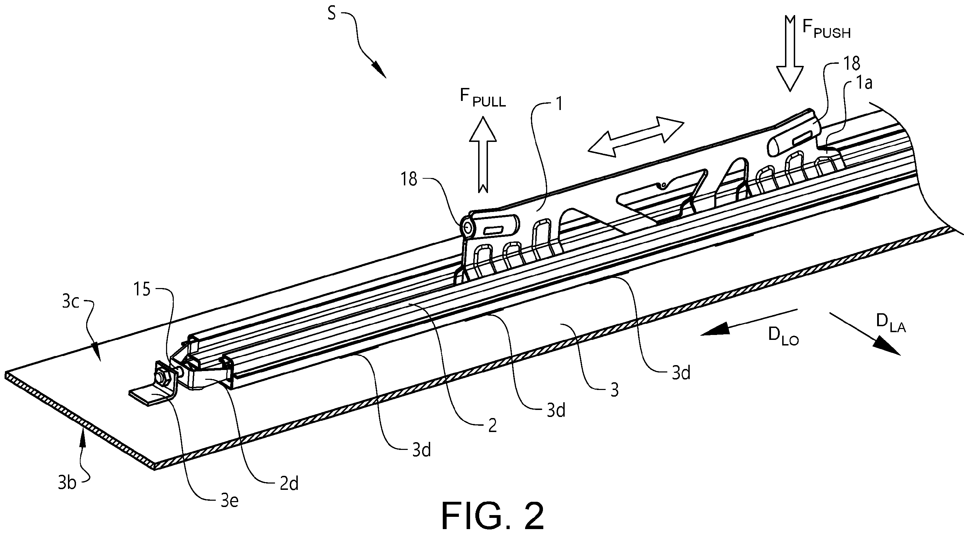

Figure 1 schematically shows a vehicle V with a seat rail system S. The seat rail system S comprises an upper rail 1 and a stationary lower rail 2, as illustrated in figures 1-4 and 7. The lower rail 2 is attached to a floor structure 3 of the vehicle V, and the upper rail 1 is attached to a vehicle seat 4. The upper rail 1 is movably arranged in relation to the lower rail 2 in a longitudinal vehicle direction D_{LO}, as indicated with the double arrow in figure 2, for a convenient adjustment and positioning of the vehicle seat 4 in relation to the floor structure 3. A lower base surface 2b of the lower rail 2 is positioned in connection to an upper surface 3c of the floor structure 3. The seat rail system S may be provided with suitable positioning and locking arrangements for positioning of the vehicle seat 4 via the upper rail 1 in relation to the lower rail 2 and the floor structure 3. The floor structure 3 is forming part of the seat rail system S, as will be further described below. Usually, two parallel seat rail systems S are used for holding one vehicle seat 4. In figure 1, the seat rail system S is illustrated in connection to a front vehicle seat 4, but the seat rail system S may be used also for other adjustable vehicle seats.

A lateral vehicle direction D_{LA} is defined as a direction perpendicular to the longitudinal vehicle direction D_{LO}. The expressions upper, lower, upwards, and downwards, used in this context are referring to directions in relation to the seat rail system S when installed in the vehicle V in the position illustrated in figure 1.

The floor structure 3 is suitably an integrated structural part of a body-in-white structure of the vehicle V having an extension in the longitudinal vehicle direction D_{LO} and lateral vehicle direction D_{LO}, or essentially in the longitudinal vehicle direction D_{LO} and lateral vehicle direction D_{LO}, as indicated in for example figure 2. With a body-in-white structure of the vehicle V is meant a car body construction in which the car body's sheet metal components have been welded together, where any moving parts, the motor or engine, the chassis or the chassis sub-assemblies, and the trim have not yet been added to the car body construction. By attaching the lower rail 2 to the floor structure 3 integrated in the body-in-white structure of the vehicle V, a secure attachment of the lower rail 2 is accomplished. Additional non-illustrated fastening brackets or similar arrangements may for example be used for the attachment of the lower rail 2 to the floor structure 3, where screw fasteners or similar fastening devices can be used for a firm and secure attachment of the lower rail 2 to the floor structure 3.

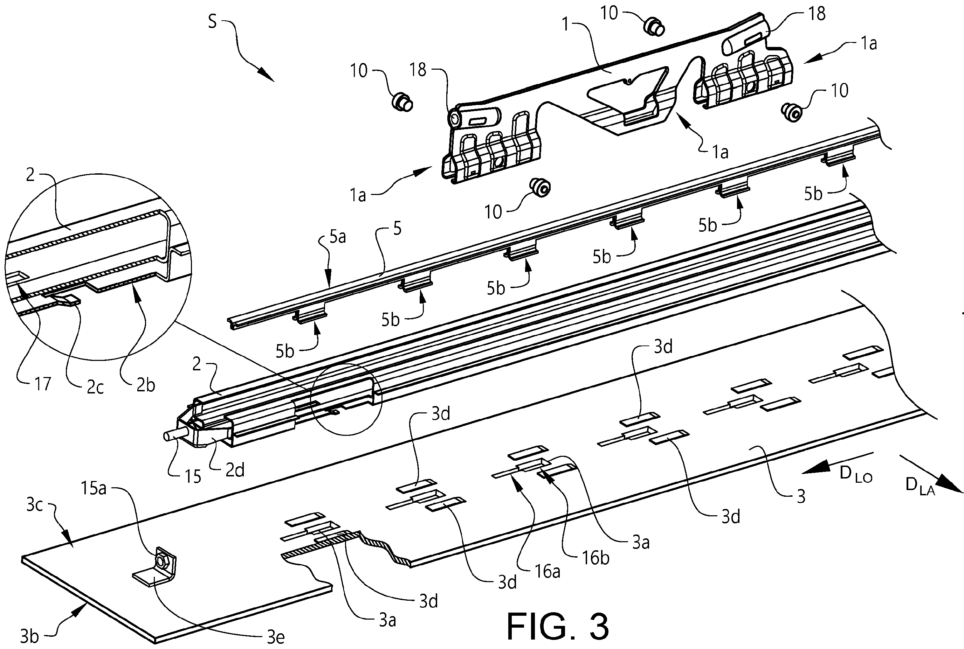

The seat rail system S further comprises an elongated load member 5 attached to the lower rail 2, as shown in for example figures 3, 4 and 6. The load member 5 is configured for being directly in engagement with the upper rail 1 and the floor structure 3 in a vehicle impact event for establishing a load path from the floor structure 3 to the upper rail 1 via the load member 5, as will be further described below.

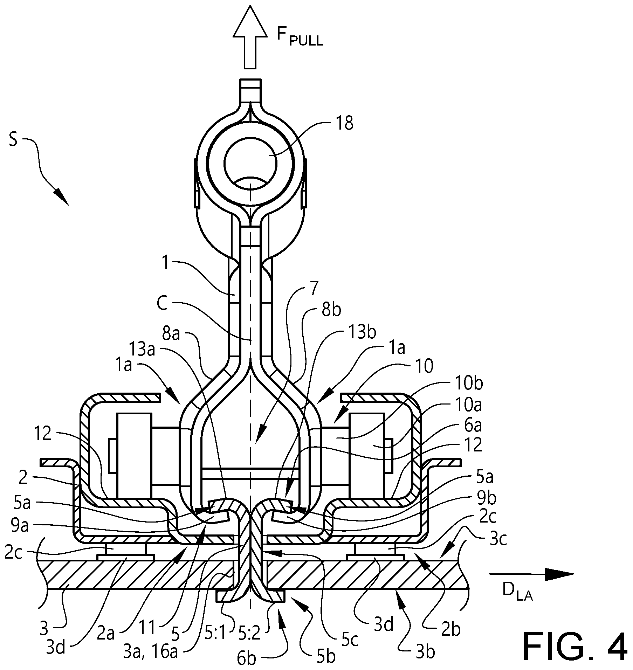

The load member 5 comprises an upper part 5a and one or more lower parts 5b. In the illustrated embodiment, the upper part 5a is extending along the length of the load member 5, and a plurality of lower parts 5b are arranged in connection to the upper part 5a in a spaced apart configuration, as understood from for example figure 3. The upper part 5a of the load member 5 has an upper T-shaped cross-sectional configuration with a laterally extending upper flange 6a, as shown in figures 3 and 4. The one or more lower parts 5b of the load member 5 have lower T-shaped cross-sectional configurations with a laterally extending lower flange 6b, as shown in figures 3, 4 and 6. A web section 5c of the load member 5 is connecting the upper flange 6a and the lower flange 6b. With a T-shaped cross-sectional configuration is meant a cross-sectional shape having a T-shape, or a shape similar to a T-shape such as the double hook like configuration shown in figure 4. The cross-sectional configuration in sections of the load member 5 where the upper parts 5a and the lower parts 5b correspond to each other is similar to an I-beam structure, or similar to an I-beam like structure, as shown in figure 4.

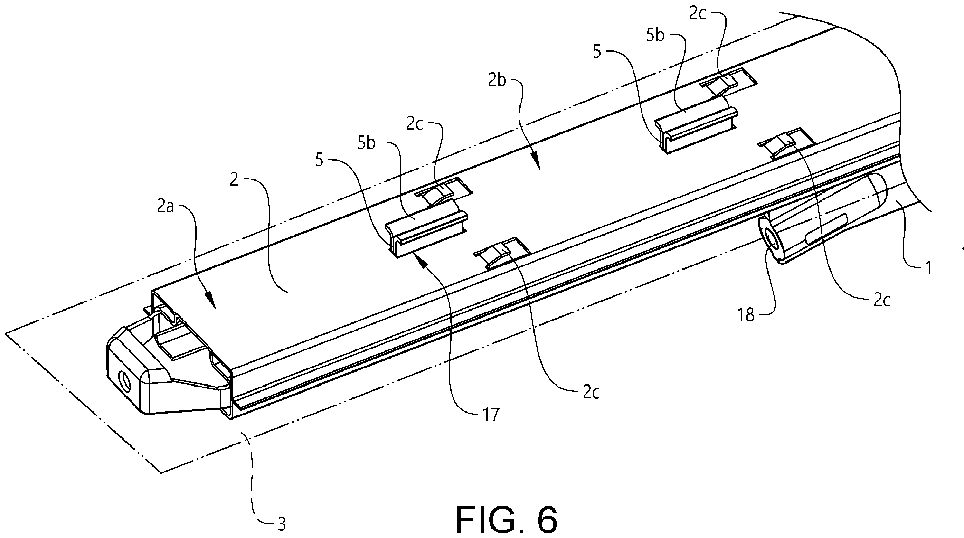

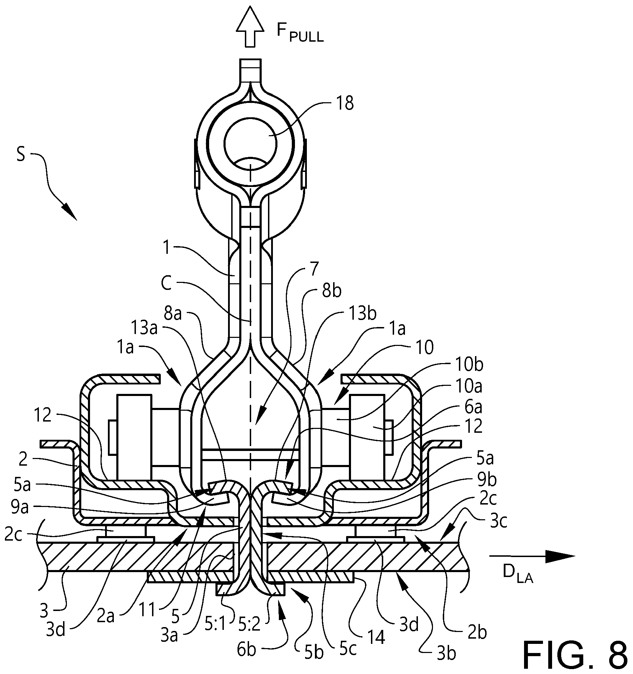

As indicated in figure 6, a lower section 2a of the lower rail 2 is arranged with a plurality rail openings 17 arranged for receiving the plurality of lower parts 5b. The lower parts 5b are suitably positioned through corresponding rail openings 17 when mounting the load member 5 to the lower rail 2, and thereafter the lower parts 5b could be bent into the lower T-shaped cross-sectional configurations, as understood from figure 8. In this way, one or more lower parts 5b of the load member 5 are extending through the lower section 2a of the lower rail 2. The load member 5 and the lower rail 2 are made of suitable materials having high strength, as for example high-strength steel, polymers, composite materials, or other suitable materials or combinations of materials. The load member 5 is attached to the lower rail 2 with suitable fastening means, such as for example welds, glue, rivets, or screw fasteners.

In the illustrated embodiment, the load member 5 comprises two joined material sections 5:1,5:2 forming the upper and lower T-shaped cross-sectional configurations with the web section 5c in-between. The material sections 5:1,5:2 each at least partly has a U-shape, or U-shape like, cross-sectional configuration, as shown in figure 4. This construction with the two joined material sections may simplify the mounting or assembling of the load member 5 to the lower rail 2, since each of the sections can be positioned into the rail openings 17 and thereafter attached to each other and to the lower rail 2.

In an assembled state of the seat rail system S, as shown in for example figure 4, the upper part 5a of the load member 5 is extending into a lower portion 1a of the upper rail 1. As understood from for example figure 3, the lower portion 1a may be sectioned into more than one structural part of the upper rail 1 for receiving the upper part 5a. In the illustrated embodiment, the upper rail 1 is arranged with three sections that together are forming the lower portion 1a and the upper part 5a of the load member 5 is extending into all three sections forming the lower portion 1a.

The upper rail 1 is further provided with upper fastening portions 18 for attaching the vehicle seat 4 to the upper rail 1, as shown in for example figures 3 and 4. The fastening portions 18 may be arranged as openings that suitably are provided with threads for receiving threaded fastening elements for attaching the vehicle seat 4 to the upper rail 1. The vehicle seat 4 may be arranged with brackets or similar structures for the attachment to the upper rail 1 and engagement with the fastening elements.

The lower portion 1a of the upper rail 1 suitably has a bell-shaped cross-sectional configuration, or a bell-shape like cross-sectional configuration, and the lower portion is with this configuration formed with a cavity 7, as shown in for example figure 4. The cavity 7 is configured for embracing the upper flange 6a of the load member 5.

The upper rail 1 comprises a first side section 8a and a second side section 8b. The side sections are suitably joined to each other with appropriate fastening means. The upper rail 1 may for example be made of two welded sheets that are forming the bell-shaped lower portion, and the welded sheets are forming lateral sides of the upper rail 1. The cavity 7 is formed between the first side section 8a and the second side section 8b, as shown in for example figure 4.

The first side section 8a comprises a lateral inwardly projecting first flange 9a and the second side section 8b comprises a lateral inwardly projecting second flange 9b. The first flange 9a and the second flange 9b are forming a lower end 11 of the lower portion 1a, and the first flange 9a and the second flange 9b are configured for being in engagement with the upper flange 6a in the vehicle impact event, as will be further described below. As shown in figure 4, the first flange 9a and the second flange 9b are arranged below the upper flange 6a, and with this configuration, the first flange 9a and the second flange 9b are in the assembled state of the seat rail system S extending in inwards directions towards the load member 5. The first side section 8a and the second side section 8b are together with the first flange 9a and the second flange 9b forming the cavity 7, which is embracing the upper flange 6a of the load member 5.

The upper flange 6a comprises a first flange section 13a and a second flange section 13b, which are extending laterally on opposite sides of the web section 5c, as shown in figure 4. In the assembled state of the seat rail system S, the first flange 9a is arranged below the first flange section 13a and the second flange 9b is arranged below the second flange section 13b. In the illustrated embodiment, the first flange 9a is extending inwards towards the load member 5 from the first side section 8a with an upwards inclined configuration, and the second flange 9b is extending inwards towards the load member 5 from the second side section 8b with an upwards inclined configuration. The first flange section 13a is extending outwards towards the first side section 8a from the web section 5c with a downwards inclined configuration, and the second flange section 13b is extending outwards towards the second side section 8b from the web section 5c with a downwards inclined configuration. The first flange section 13a has suitably an extension parallel to, or essentially parallel to, the extension of the first flange 9a, and the second flange section 13b has suitably an extension parallel to, or essentially parallel to, the extension of the second flange 9b.

The seat rail system S further comprises laterally extending bearing structures 10, as shown in for example figures 3 and 4. The bearing structures 10 are attached to the upper rail 1, and the bearing structures 10 are extending laterally in opposite directions from the upper rail 1. The bearing structures 10 may be arranged pairwise on opposite sides of the upper rail. The bearing structures 10 are configured for movably engaging the lower rail 2 and for providing a low-friction engagement between the upper rail 1 and the lower rail 2. The bearing structures 10 comprise bearings 10a, and the bearings 10a are suitably connected to the upper rail 1 via extending shaft structures 10b or similar arrangements for lateral positioning of the bearings 10a in relation to the lower rail 2.

The lower rail 2 comprises two bearing surfaces 12 laterally arranged on opposite sides of the load member 5, as shown in for example figure 4. The bearings 10a and the bearing surfaces 12 are configured for interacting with each other when the upper rail 1 is displaced in relation to the lower rail 2. In the embodiment illustrated in figure 3 and 4, the first rail 1 comprises two pairs of bearing structures 10 arranged for interacting with the bearing surfaces 12. However, any suitable number of bearing structures 10 may be used. The bearings 10a may for example be roller bearings and the roller bearings may be provided with wheel elements or similar structures for rolling interaction with the bearing surfaces 12 upon longitudinal displacement of the upper rail 1 in relation to the lower rail 2. The bearings 10a may alternatively be sliding bearings for sliding interaction with the bearing surfaces 12 upon longitudinal displacement of the upper rail 1 in relation to the lower rail 2. Other types of bearings may also be used depending on the construction and design of the seat rail system S. The bearing structures 10 are as illustrated in figure 4 positioned above the lower end 11 of the lower portion 1a of the upper rail 1 for a compact and robust construction of the seat rail system S.

As shown in figure 4, the one or more lower parts 5b of the load member 5 are extending through the floor structure 3 through corresponding openings 3a of the floor structure 3. The positions of the openings 3a are coinciding with the spacing of the lower parts 5b along the load member 5, as understood from figure 3. The openings 3a have narrowing configurations, and the openings 3a are tapering in the longitudinal vehicle direction D_{LO}. Suitable narrowing shapes are for example keyhole like shapes as illustrated in figure 3. However, any suitable narrowing shape may be used. The openings 3a in the illustrated embodiment are provided with narrow sections 16a and wide sections 16b. The narrowing configuration is allowing an efficient installation of the lower rail 2 to the floor structure 3 through the wide sections 16b of the openings 3a, as well as an efficient connection between the load member 5 and the floor structure 3 when the lower rail 2 is in a final mounting position in relation to the floor structure 3. In the final mounting position, the load member 5 is configured for interacting with the narrow sections of the openings 3a.

The load member 5 is configured for being directly in engagement with the floor structure 3 and the lower portion 1a of the upper rail 1 in the vehicle impact event for establishing a load path from the floor structure 3 to the upper rail 1 via the load member 5. With a vehicle impact event is meant any situation where the vehicle V is exposed to impact forces, such as when the vehicle V is hitting an object or an object is hitting the vehicle V. Typical vehicle impact events are when the vehicle V is involved in a crash situation or collision, for example with another vehicle, or if the vehicle V leaves a roadway in a run-off-road collision or similar event. If the vehicle V is involved in a collision, impact forces will act on the vehicle seat 4 and the seat rail system S.

In a head-on collision, or in a collision where the front end of the vehicle V runs into an object, the front part of the upper rail 1 is pushed downwards towards the second rail 2 by a pushing force F_{PUSH} and the rear part of the upper rail 1 is pulled in a direction upwards away from the second rail 2 by a pulling force F_{PULL}, due to the forces acting on the vehicle seat 4 causing a rotational movement. In a rear-end collision, or in a collision where the rear end of the vehicle V runs into an object, the front part of the upper rail 1 is pulled in a direction upwards away from the second rail 2 by a pulling force F_{PULL} and the rear part of the upper rail 1 is pushed downwards towards the second rail 2 by a pushing force F_{PUSH}, due to the forces acting on the vehicle seat 4 causing a rotational movement. The pushing force F_{PUSH} and the pulling force F_{PULL} are schematically illustrated in figure 2.

The strength of the seat rail system S is critical when a pulling force F_{PULL} is acting on the upper rail 1, such as in the vehicle impact events described above. The pulling force F_{PULL} is illustrated with an arrow in figure 4, indicating that a part of the upper rail 1 is pulled in a direction upwards away from the second rail 2. When the pulling force F_{PULL} is acting on a part of the seat rail system S, the load member 5 has the function to directly engage the floor structure 3 and directly engage the upper rail 1. In this way, the floor structure 3 is connected to the upper rail 1 via the load member 5 for establishing the load path from the floor structure 3 to the upper rail 1 via the load member 5. The load member 5 is establishing a strong and robust construction of the seat rail system S that is preventing large and unwanted deformations of the rails. With this system configuration, the load member 5 is directly in engagement with both the floor structure 3 and the lower portion 1a in the vehicle impact event. The established load path in the vehicle impact event from the floor structure 3 to the upper rail 1 via the load member 5, is through the engagement of the load member 5 following a centre line C of seat rail system S from the floor structure 3 to the upper rail for establishing a short load path compared to traditional systems, as indicated in figure 4.

More specifically, the upper flange 6a is configured for being directly in engagement with the lower portion 1a of the upper rail 1 in the vehicle impact event for establishing a load path from the floor structure 3 to the upper rail 1 via the load member 5. The first flange 9a is engaging the first flange section 13a in the vehicle impact event, and the second flange 9b is engaging the second flange section 13b in the vehicle impact event for a strong connection between the upper rail 1 and the load member 5. In this way, the first flange 9a and the second flange 9b are configured for being in engagement with the upper flange 6a in the vehicle impact event. As understood from figure 4, the parts involved are arranged as hook-like elements that are interacting with each other in the vehicle impact event, preventing that the upper rail 1 is separated from the lower rail 2 due to the connection of the load member 5 to the lower portion 1a. In the vehicle impact event, the upper rail 1 is pulled a small distance upwards away from the lower rail 2 due to minimal play between parts involved. There is a small play between the upper flange 6a and the respective first flange 9a and the second flange 9b in normal operating conditions, which is allowing the movement of the upper rail 1 in relation to the lower rail 2 in the longitudinal vehicle direction D_{LO} for the positioning of the vehicle seat 4 relative to the floor structure 3.

In a similar way, the one or more lower parts 5b of the load member 5 are configured for being in engagement with a lower surface 3b of the floor structure 3 in the vehicle impact event. The lower flange 6b is engaging the lower surface 3b of the floor structure 3 in the vehicle impact event for a strong connection between the floor structure 3 and the load member 5. As understood from figure 4, the lower flange 6b is interacting with the floor structure 3 in connection to the narrow sections 16a of the openings 3a, preventing that the lower rail 2 is separated from the floor structure 3. As shown in figure 4, the lower flanges 6b of the lower parts 5b are arranged as hook-like elements that are interacting with the lower surface 3b of the floor structure 3 in the vehicle impact event, preventing that the lower rail 2 is separated from the floor structure 3 due to the connection of the load member 5 to the floor structure 3.

The construction of the seat rail system S is providing a straight symmetrical load path all the way from the floor structure 3 to the vehicle seat via the upper rail 1, allowing a compact construction of the seat rail system S with low height and low weight.

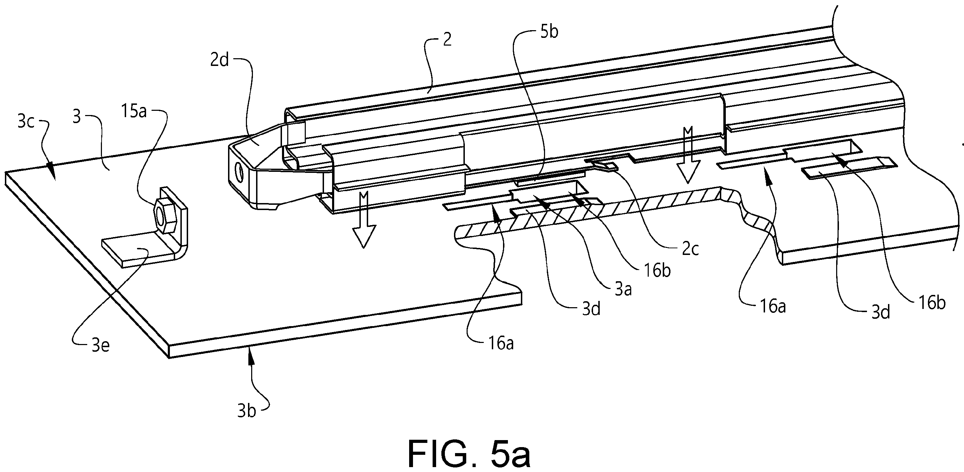

The seat rail system S further comprises a mounting bracket 2d connected to the lower rail 2 and a mounting element 3e connected to the floor structure 3, as shown in for example figure 2. The mounting bracket 2d may be arranged as an integrated part of the lower rail 2, and attached to the lower rail 2 by welding or with other suitable fastening means. The mounting element 3e may be arranged as an integrated part of the floor structure 3 or arranged as a separately attached part that is firmly connected to the floor structure 3 by welding or with other suitable fastening means. The mounting bracket 2d and the mounting element 3e are used when mounting the lower rail 2 to the floor structure 3, and for holding the lower rail 2 in position in relation to the floor structure 3. In the final mounting position, as shown in figure 2, the mounting bracket 2d is attached to the mounting element 3e via a fastening element 15. The fastening element 15 is suitably a threaded screw or similar device that is engaging a hole in the mounting bracket 2d and a hole in the mounting element 3e, and a nut 15a may be used for the engagement between the parts. The nut 15a may be attached to the mounting element 13e, as shown in for example figure 5a. The fastening element 15 is firmly connecting the lower rail 2 to the mounting element 3e.

The lower base surface 2b of the lower rail 2 comprises one or more first wedge elements 2c and the upper surface 3c of the floor structure 3 comprises one or more corresponding second wedge elements 3d, as shown in for example figures 3, 4, and 5a-c. In the illustrated embodiment, a plurality of first wedge elements 2c are arranged on the lower rail 2 and the first wedge elements 2c are arranged on laterally opposite sides of the lower parts 5b. The first wedge elements 2c are extending in a downwards inclined direction from the lower base surface 2b, and the first wedge elements 2c may for example be made as bent down cut-out portions of the lower base surface 2b, as shown in figure 6. The first wedge elements 2c may however have any suitable structural configuration, such as structural parts arranged below the lower base surface 2b. The floor structure 3 is provided with a plurality of corresponding second wedge elements 3d arranged on opposite sides of the openings 3a. The corresponding second wedge elements 3d are extending in an upwards inclined direction from the upper surface 3c of the floor structure 3. The second wedge elements 3d may be integrated in the floor structure 3 or arranged as parts attached to the floor structure 3. The one or more first wedge elements 2c and the corresponding one or more second wedge elements 3d are configured for interacting with each other for establishing a clamping action between the one or more lower parts 5b and the lower surface 3b of the floor structure 3, when the lower rail is attached to the surface structure 3.

The interaction between the one or more first wedge elements 2c and the corresponding one or more second wedge elements 3d is preventing the lower rail 2 from being pulled a small distance upwards away from the floor structure 3 in the vehicle impact event. The clamping action is removing any play that otherwise could occur between the lower flange 6b and the lower surface 3b of the floor structure 3.

The mounting bracket 2d and the mounting element 3e are configured for positioning the one or more first wedge elements 2c and the one or more corresponding second wedge elements 3d in contact with each other for establishing the clamping action between the one or more lower parts 5b and the lower surface 3b. More specifically, the laterally extending lower flanges 6b of the one or more lower parts 5b are interacting with the lower surface 3b of the floor structure 3, and the lower flanges 6b are configured for establishing the clamping action with the lower surface 3b. The fastening element 15 is used for establishing the force needed for positioning the one or more first wedge elements 2c and the one or more corresponding second wedge elements 3d in contact with each other when mounting the lower rail 2 to the floor structure 3 through displacement of the lower rail 2 in the longitudinal vehicle direction D_{LO}.

To assemble the seat rail system S into the mounted position shown in figure 2, the second rail 2 with the load member 5 may first be connected to the floor structure 3, as illustrated in figures 5a-c. The lower rail 2 is arranged in connection to the floor structure 3 in a position where the one or more lower parts 5b are facing corresponding openings 3a of the floor structure 3. The wide sections 16b of the openings 3a in the floor structure 3 have suitable sizes for receiving corresponding lower parts 5b, and the lower parts 5b with the lower flange 6b are inserted into the wide sections 16b when mounting the lower rail 2 with the load member 5 to the floor structure 3, as indicated with the arrows in figure 5a. The lower rail 2 is thus pushed in a downwards direction towards the floor structure 3 for positioning the one or more lower parts 5b through the corresponding openings 3a of the floor structure 3. The lower parts 5b of the load member 5 are entering the wide sections 16b in the downwards movement of the lower rail 2, and when inserted into the openings 3a, the lower parts 5b are extending through the floor structure 3 and the lower flanges 6b are positioned below the floor structure 3, and the lower flanges 6b are in this way extending below the lower surface 3b of the floor structure 3.

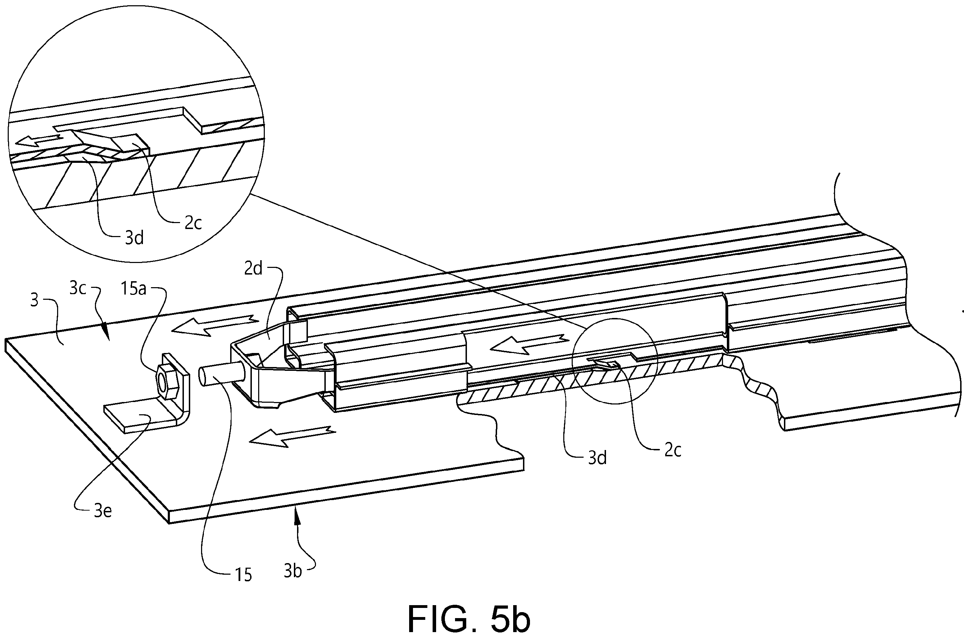

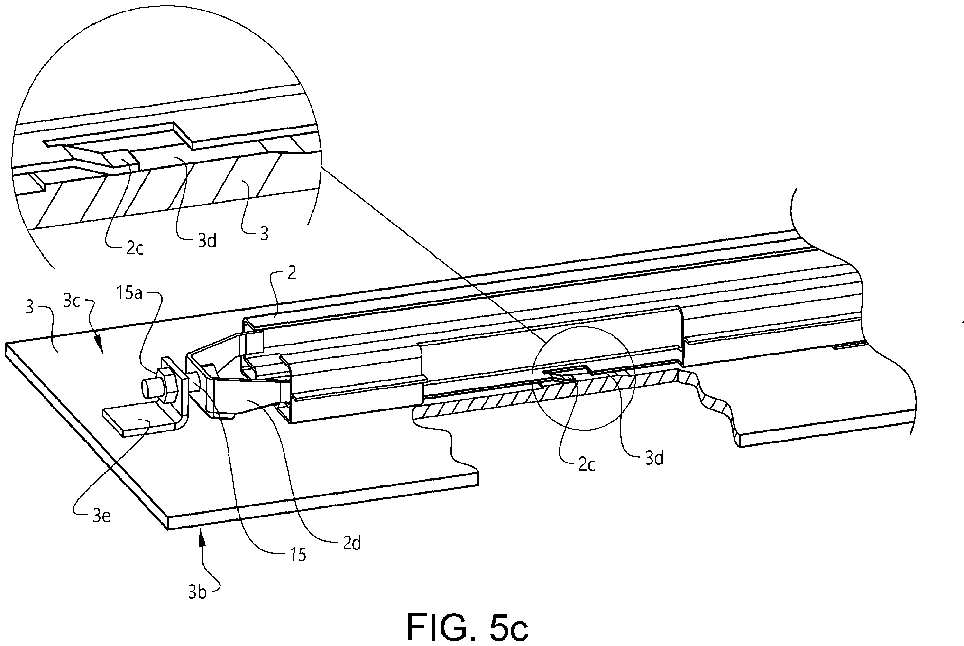

Thereafter, the lower rail 2 is when inserted into the wide sections 16b of the openings 3a pushed in a direction towards the narrow sections 16a, as indicated with arrows in figure 5b. When sliding the lower rail 2 in relation to the floor structure 3 in the longitudinal vehicle direction D_{LO}, interaction between the one or more first wedge elements 2c and the corresponding one or more second wedge elements 3d is established, as shown in figure 5b, where inclined surfaces of the first wedge elements 2c are interacting with inclined surfaces of the second wedge elements 3d. Through the interaction between the one or more first wedge elements 2c and the corresponding one or more second wedge elements 3d the clamping action is established between the lower flanges 6b and the lower surface 3b. The interaction between the first wedge elements 2c and the second wedge elements 3d is lifting the lower rail 2 a small distance upwards to the position shown in figures 4 and 5c. When the lower rail 2 is lifted the small distance upwards, the clamping action is established between the lower flanges 6b and the lower surface 3b of the floor structure 3, in connection to the narrow sections 16a of the openings 3a, as understood from figure 4. The first wedge elements 2c and the corresponding second wedge elements 3d are holding the lower rail 2 in position in relation to the floor structure 3. The wedge elements may if suitable be arranged with a spring action for a strong clamping action. By pushing the lower rail 2 in the longitudinal vehicle direction D_{LO} towards the narrow sections 16a, the lower flanges 6b will be positioned below the floor structure 3 into the final mounting position, as shown in figure 5c. When the lower flanges 6b are positioned below the floor structure 3 within the narrow sections 16a, the lower rail 2 is prevented from being displaced in an upwards direction due to engagement between the lower flanges 6b and a lower surface 3b of the floor structure 3, as understood from figure 4. The wedge elements are suitably of a robust construction for holding the weight of the vehicle seat 4 and an occupant.

The pushing of the lower rail 2 in the longitudinal vehicle direction D_{LO} towards the narrow sections 16a may be established with help of the fastening element 15 during the mounting of the lower rail 2 to the floor structure 3. The mounting bracket 2d is connected to the mounting element 3e with the fastening element 15 when the lower rail 2 has been pushed in the downwards direction towards the floor structure 3. The sliding movement of the lower rail 2 in relation to the floor structure 3 in the longitudinal vehicle direction D_{LO} is established through action from the fastening element 15. The fastening element 15 may first be attached to the mounting bracket 2d and thereafter be inserted into the nut 15a of the mounting element 3e. When screwing the fastening element 15 into the nut 15a, a sliding movement between the lower rail 2 and the floor structure 3 is established. The sliding movement of the lower rail 2 in relation to the floor structure 3 is positioning the one or more first wedge elements 2c and the one or more corresponding second wedge elements 3d in contact with and on top of each other for establishing the clamping action between one or more lower flanges 6b and the lower surface 3b of the floor structure 3 into the final mounting position in figures 4 and 5c.

The second rail 2 may be further attached to the floor structure 3 via the non-illustrated additional fastening brackets, as described above. When the lower rail 2 is attached to the floor structure 3, the upper rail 1 and the vehicle seat 4 may be mounted to the lower rail 2.

The seat rail system S may further comprise one or more reinforcement plate structures 14 arranged below the floor structure 3 between the lower surface 3b and one or more of the lower flanges 6b, as illustrated in the alternative embodiment shown in figure 8. The lower flanges 6b are in this embodiment configured for establishing the clamping action with the lower surface 3b via the one or more reinforcement plate structures 14, as understood from the figure. The one or more reinforcement plate structures 14 may be arranged as a structural piece of material that is increasing the strength of the seat rail system S, where the one or more reinforcement plate structures 14 are attached to the lower surface 3b of the floor structure 3 with suitable attachment means, such as welding or gluing. The one or more reinforcement plate structure 14 are made of any suitable material, such as steel, aluminium, composite materials or a combination of different materials. The one or more reinforcement plate structures 14 may be arranged as one reinforcement element forming a single reinforcement plate structure 14 that is extending along the full length of, or a part of the length of, the lower rail 2 below the floor structure 3, where the reinforcement plate structure 14 comprises openings corresponding to the openings 3a in the floor structure 3. Alternatively, one or more reinforcement plate structures 14 may instead be arranged as separate reinforcement elements in connection to one or more of the openings 3a in the floor structure 3, where each reinforcement plate structure 14 is provided with an opening corresponding to the opening 3a in the floor structure 3.

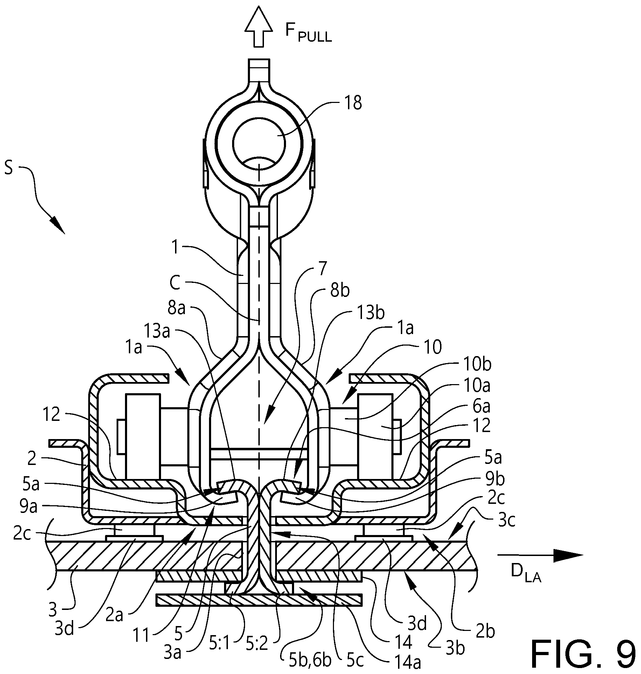

In yet another alternative embodiment, the one or more reinforcement plate structures 14 comprise one or more lower plate sections 14a arranged below one or more of the lower flanges 6b, as shown in figure 9. The one or more reinforcement plate structures 14 may have the configurations described above with the lower plate section or sections 14a attached to the one or more reinforcement plate structures 14. The lower plate section or sections 14a may form an integrated part of the one or more reinforcement plate structures 14, such as folded pieces of material in connection to the openings in the one or more reinforcement plate structures 14. Alternatively, the lower plate section or sections 14a may be arranged as a separate piece of material or pieces of material attached to the one or more reinforcement plate structures 14.

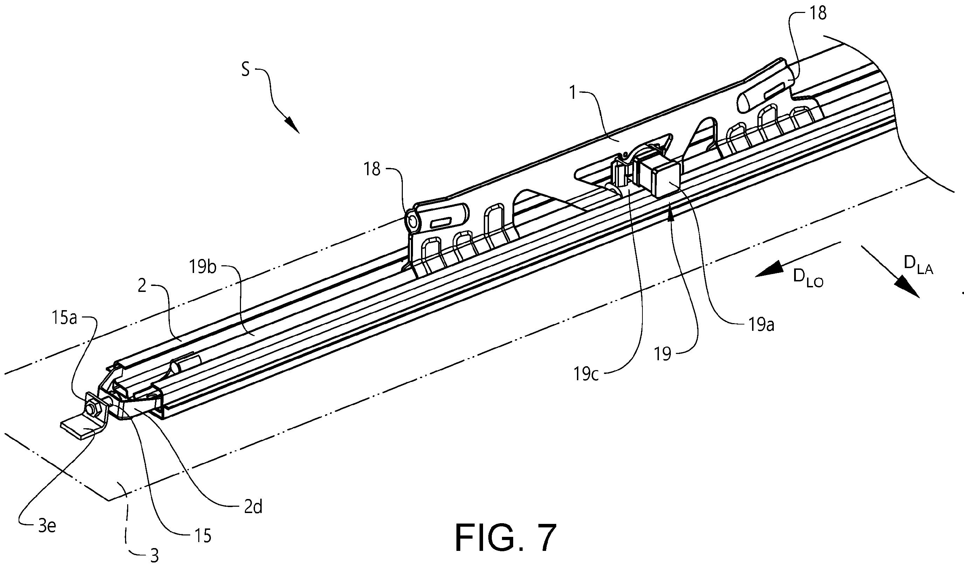

As illustrated in figure 7, the seat rail system S may further be provided with a drive mechanism 19 for positioning the upper rail 1 in relation to the lower rail 2. The drive mechanism may comprise an electric motor 19a and be configured as a worm drive mechanism. The worm drive mechanism may comprise an elongated threaded rod 19b connected to the lower rail 2 that is interacting with a worm gear 19c arranged on the upper rail 1. It should be understood that the drive mechanism 19 could have other suitable constructions, such as for example a linear actuator or ball screw mechanism.

Reference signs mentioned in the claims should not be seen as limiting the extent of the matter protected by the claims, and their sole function is to make claims easier to understand.

### REFERENCE SIGNS

- 1:: Upper rail
- 1a:: Lower portion
- 2:: Lower rail
- 2a:: Lower section
- 2b:: Lower base surface
- 2c:: First wedge element
- 2d:: Mounting bracket
- 3:: Floor structure
- 3a:: Opening
- 3b:: Lower surface
- 3c:: Upper surface
- 3d:: Second wedge element
- 3e:: Mounting element
- 4:: Vehicle seat
- 5:: Load member
- 5a:: Upper part
- 5b:: Lower part
- 5c:: Web section
- 6a:: Upper flange
- 6b:: Lower flange
- 7:: Cavity
- 8a:: First side section
- 8b:: Second side section
- 9a:: First flange
- 9b:: Second flange
- 10:: Bearing structure
- 10a:: Bearing
- 10b:: Shaft structure
- 11:: Lower end
- 12:: Bearing surface
- 13a:: First flange section
- 13b:: Second flange section
- 14:: Reinforcement plate structure
- 14a:: Lower plate section
- 15:: Fastening element
- 15a:: Nut
- 16a:: Narrow section
- 16b:: Wide section
- 17:: Opening
- 18:: Fastening portion
- 19:: Drive mechanism
- 19a:: Electric motor
- 19b:: Threaded rod
- 19c:: Worm gear

- D_{LA}:: Lateral vehicle direction
- D_{LO}:: Longitudinal vehicle direction
- S:: Seat rail system
- V:: Vehicle

## Claims

1. A seat rail system (S) for a vehicle (V), wherein the seat rail system (S) comprises an upper rail (1) and a stationary lower rail (2) attachable to a floor structure (3) of
the vehicle (V), wherein the upper rail (1) is configured for being attached to a vehicle seat (4), wherein the upper rail (1) is movably arranged in relation to the lower rail (2) in a longitudinal vehicle direction (D_{LO}), wherein the seat rail system (S) further comprises an elongated load member (5) attached to the lower rail (2), wherein an upper part (5a) of the load member (5) is extending into a lower portion (1a) of the upper rail (1),
**characterized in that** one or more lower parts (5b) of the load member (5) are extending through the floor structure (3), wherein a lower base surface (2b) of the lower rail (2) comprises one or more first wedge elements (2c) and wherein an upper surface (3c) of the floor structure (3) comprises one or more corresponding second wedge elements (3d), wherein the one or more first wedge elements (2c) and the corresponding one or more second wedge elements (3d) are configured for interacting with each other for establishing a clamping action between the one or more lower parts (5b) and a lower surface (3b) of the floor structure (3).

2. The seat rail system (S) according to claim 1,
**characterized in that** the one or more lower parts (5b) of the load member (5) are extending through corresponding openings (3a) of the floor structure (3), wherein the openings (3a) have narrowing configurations.

3. The seat rail system (S) according to claim 1 or 2,
**characterized in that** the one or more first wedge elements (2c) are arranged on laterally opposite sides of the one or more lower parts (5b).

4. The seat rail system (S) according to any preceding claim,
**characterized in that** the one or more first wedge elements (2c) are extending in a downwards direction from the lower base surface (2b), and wherein the one or more corresponding second wedge elements (3d) are extending in an upwards direction from the upper surface (3c).

5. The seat rail system (S) according to any preceding claim,
**characterized in that** the one or more lower parts (5b) comprise laterally extending lower flanges (6b), wherein the lower flanges (6b) are configured for establishing the clamping action with the lower surface (3b).

6. The seat rail system (S) according to claim 5,
**characterized in that** the seat rail system (S) further comprises one or more reinforcement plate structures (14) arranged between the lower surface (3b) and one or more of the lower flanges (6b), wherein the lower flanges (6b) are configured for establishing the clamping action with the lower surface (3b) via the one or more reinforcement plate structures (14).

7. The seat rail system (S) according to claim 6,
**characterized in that** the one or more reinforcement plate structures (14) comprise one or more lower plate sections (14a) arranged below one or more of the lower flanges (6b).

8. The seat rail system (S) according to any preceding claim,
**characterized in that** the seat rail system (S) further comprises a mounting bracket (2d) connected to the lower rail (2) and a mounting element (3e) connectable to the floor structure (3), wherein the mounting bracket (2d) is attached to the mounting element (3e) via a fastening element (15), wherein the mounting bracket (2d) and the mounting element (3e) are configured for positioning the one or more first wedge elements (2c) and the one or more corresponding second wedge elements (3d) in contact with each other for establishing the clamping action between the one or more lower parts (5b) and the lower surface (3b).

9. The seat rail system (S) according to any preceding claim,
**characterized in that** the upper part (5a) comprises a laterally extending upper flange (6a), wherein the lower portion (1a) of the upper rail (1) has a bell-shaped cross-sectional configuration forming a cavity (7), wherein the cavity (7) is configured for embracing the upper flange (6a), wherein the upper flange (6a) is configured for being directly in engagement with the lower portion (1a) in a vehicle impact event for establishing a load path from the floor structure (3) to the upper rail (1) via the load member (5).

10. The seat rail system (S) according to claim 9,
**characterized in that** the upper rail (1) comprises a first side section (8a) and a second side section (8b) joined to each other, wherein the cavity (7) is formed between the first side section (8a) and the second side section (8b), wherein the first side section (8a) comprises a lateral inwardly projecting first flange (9a) and the second side section (8b) comprises a lateral inwardly projecting second flange (9b), wherein the first flange (9a) and the second flange (9b) are configured for being in engagement with the upper flange (6a) in the vehicle impact event.

11. A vehicle (V) comprising the seat rail system (S) according to any of claims 1-10.

12. A method for assembling parts of a seat rail system (S) for a vehicle (V), wherein the seat rail system (S) comprises an upper rail (1) and a stationary lower rail (2) attachable to a floor structure (3) of the vehicle (V), wherein the upper rail (1) is configured for being attached to a vehicle seat (4), wherein the upper rail (1) is movably arranged in relation to the lower rail (2) in a longitudinal vehicle direction (D_{LO}), wherein the seat rail system (S) further comprises an elongated load member (5) attached to the lower rail (2), wherein the elongated load member (5) comprises an upper part (5a) having a laterally extending upper flange (6a) and one or more lower parts (5b) having laterally extending lower flanges (6b), wherein a lower base surface (2b) of the lower rail (2) comprises one or more first wedge elements (2c) and an upper surface (3c) of the floor structure (3) comprises one or more corresponding second wedge elements (3d), wherein the method comprises the steps:
arranging the lower rail (2) in connection to the floor structure (3) in a position where the one or more lower parts (5b) are facing corresponding openings (3a) of the floor structure (3), wherein the openings (3a) have narrowing configurations;
pushing the lower rail (2) in a downwards direction towards the floor structure (3) for positioning the one or more lower parts (5b) through the corresponding openings (3a) of the floor structure (3), wherein the lower flanges (6b) are extending below a lower surface (3b) of the floor structure (3);
sliding the lower rail (2) in relation to the floor structure (3) in the longitudinal vehicle direction (D_{LO}) for establishing interaction between the one or more first wedge elements (2c) and the corresponding one or more second wedge elements (3d), wherein upon interaction between the one or more first wedge elements (2c) and the corresponding one or more second wedge elements (3d) a clamping action is established between one or more lower flanges (6b) and the lower surface (3b) in connection to narrow sections (16a) of the openings (3a).

13. The method according to claim 12,
**characterized in that** the seat rail system (S) further comprises a mounting bracket (2d) connected to the lower rail (2) and a mounting element (3e) connected to the floor structure (3), wherein the method further comprises the steps: connecting the mounting bracket (2d) to the mounting element (3e) with a fastening element (15) after pushing the lower rail (2) in the downwards direction towards the floor structure (3); and sliding the lower rail (2) in relation to the floor structure (3) in the longitudinal vehicle direction (D_{LO}) through action from the fastening element (15), wherein the sliding movement of the lower rail (2) in relation to the floor structure (3) is positioning the one or more first wedge elements (2c) and the one or more corresponding second wedge elements (3d) in contact with each other for establishing the clamping action between one or more lower flanges (6b) and the lower surface (3b).

14. The method according to claim 12 or 13,
**characterized in that** the seat rail system (S) further comprises one or more reinforcement plate structures (14) arranged between the lower surface (3b) and one or more of the lower flanges (6b), wherein the method further comprises the step: establishing the clamping action between one or more lower flanges (6b) and the lower surface (3b) via the one or more reinforcement plate structures (14).

## Patentansprüche

1. Sitzschienensystem (S) für ein Fahrzeug (V), wobei das Sitzschienensystem (S) eine obere Schiene (1) und eine unbewegliche untere Schiene (2) umfasst, die an einer Bodenstruktur (3) des Fahrzeugs (V) befestigbar ist, wobei die obere Schiene (1) dazu ausgestaltet ist, an einem Fahrzeugsitz (4) befestigt zu werden, wobei die obere Schiene (1) in Bezug auf die untere Schiene (2) in einer Fahrzeuglängsrichtung (D_{LO}) beweglich angeordnet ist, wobei das Sitzschienensystem (S) ferner ein längliches Lastelement (5) umfasst, das an der unteren Schiene (2) befestigt ist, wobei ein oberer Teil (5a) des Lastelements (5) sich in einen unteren Abschnitt (1a) der oberen Schiene (1) erstreckt,
**dadurch gekennzeichnet, dass** ein oder mehrere untere Teile (5b) des Lastelements (5) sich durch die Bodenstruktur (3) erstrecken, wobei eine untere Basisoberfläche (2b) der unteren Schiene (2) ein oder mehrere erste Keilelemente (2c) umfasst, und wobei eine obere Oberfläche (3c) der Bodenstruktur (3) ein oder mehrere entsprechende zweite Keilelemente (3d) umfasst, wobei das eine oder die mehreren ersten Keilelemente (2c) und das entsprechende eine oder die entsprechenden mehreren zweiten Keilelemente (3d) dazu ausgestaltet sind, miteinander in Wechselwirkung zu treten, um eine Klemmwirkung zwischen dem einen oder den mehreren unteren Teilen (5b) und einer unteren Oberfläche (3b) der Bodenstruktur (3) bereitzustellen.

2. Sitzschienensystem (S) nach Anspruch 1,
**dadurch gekennzeichnet, dass** der eine oder die mehreren unteren Teile (5b) des Lastelements (5) sich durch entsprechende Öffnungen (3a) der Bodenstruktur (3) erstrecken, wobei die Öffnungen (3a) verjüngende Ausgestaltungen aufweisen.

3. Sitzschienensystem (S) nach Anspruch 1 oder 2,
**dadurch gekennzeichnet, dass** das eine oder die mehreren ersten Keilelemente (2c) auf lateral gegenüberliegenden Seiten des einen oder der mehreren unteren Teile (5b) angeordnet sind.

4. Sitzschienensystem (S) nach einem vorstehenden Anspruch,
**dadurch gekennzeichnet, dass** das eine oder die mehreren ersten Keilelemente (2c) sich in eine Abwärtsrichtung von der unteren Basisoberfläche (2b) erstrecken, und wobei das eine oder die mehreren entsprechenden zweiten Keilelemente (3d) sich in eine Aufwärtsrichtung von der oberen Oberfläche (3c) erstrecken.

5. Sitzschienensystem (S) nach einem vorstehenden Anspruch,
**dadurch gekennzeichnet, dass** der eine oder die mehreren unteren Teile (5b) sich lateral erstreckende untere Flansche (6b) umfassen, wobei die unteren Flansche (6b) dazu ausgestaltet sind, die Klemmwirkung mit der unteren Oberfläche (3b) bereitzustellen.

6. Sitzschienensystem (S) nach Anspruch 5,
**dadurch gekennzeichnet, dass** das Sitzschienensystem (S) ferner eine oder mehrere Verstärkungsplattenstrukturen (14) umfasst, die zwischen der unteren Oberfläche (3b) und einem oder mehreren der unteren Flansche (6b) angeordnet sind, wobei die unteren Flansche (6b) dazu ausgestaltet sind, die Klemmwirkung mit der unteren Oberfläche (3b) über die eine oder mehreren Verstärkungsplattenstrukturen (14) bereitzustellen.

7. Sitzschienensystem (S) nach Anspruch 6,
**dadurch gekennzeichnet, dass** die eine oder mehreren Verstärkungsplattenstrukturen (14) einen oder mehrere untere Plattenteilbereiche (14a) umfassen, die unter einem oder mehreren der unteren Flansche (6b) angeordnet sind.

8. Sitzschienensystem (S) nach einem vorstehenden Anspruch,
**dadurch gekennzeichnet, dass** das Sitzschienensystem (S) ferner einen Befestigungsbügel (2d), der mit der unteren Schiene (2) verbunden ist, und ein Befestigungselement (3e) umfasst, das mit der Bodenstruktur (3) verbindbar ist, wobei der Befestigungsbügel (2d) über ein Fixierungselement (15) an dem Befestigungselement (3e) befestigt ist, wobei der Befestigungsbügel (2d) und das Befestigungselement (3e) dazu ausgestaltet sind, das eine oder die mehreren ersten Keilelemente (2c) und das eine oder die mehreren entsprechenden zweiten Keilelemente (3d) in Kontakt miteinander zu positionieren, um die Klemmwirkung zwischen dem einen oder den mehreren unteren Teilen (5b) und der unteren Oberfläche (3b) bereitzustellen.

9. Sitzschienensystem (S) nach einem vorstehenden Anspruch,
**dadurch gekennzeichnet, dass** der obere Teil (5a) einen sich seitlich erstreckenden oberen Flansch (6a) umfasst, wobei der untere Abschnitt (1a) der oberen Schiene (1) im Querschnitt eine glockenförmige Ausgestaltung aufweist, die einen Hohlraum (7) bildet, wobei der Hohlraum (7) dazu ausgestaltet ist, den oberen Flansch (6a) zu umschließen, wobei der obere Flansch (6a) dazu ausgestaltet ist, in einem Fahrzeugaufprallereignis in direktem Eingriff mit dem unteren Abschnitt (1a) zu stehen, um über das Lastelement (5) einen Lastweg von der Bodenstruktur (3) zu der oberen Schiene (1) bereitzustellen.

10. Sitzschienensystem (S) nach Anspruch 9,
**dadurch gekennzeichnet, dass** die obere Schiene (1) einen ersten Seitenteilbereich (8a) und einen zweiten Seitenteilbereich (8b) umfasst, die miteinander verbunden sind, wobei der Hohlraum (7) zwischen dem ersten Seitenteilbereich (8a) und dem zweiten Seitenteilbereich (8b) gebildet ist, wobei der erste Seitenteilbereich (8a) einen lateralen nach innen vorstehenden ersten Flansch (9a) umfasst, und der zweite Seitenteilbereich (8b) einen lateralen nach innen vorstehenden zweiten Flansch (9b) umfasst, wobei der erste Flansch (9a) und der zweite Flansch (9b) dazu ausgestaltet sind, im Fall des Fahrzeugaufprallereignisses mit dem oberen Flansch (6a) in Eingriff zu stehen.

11. Fahrzeug (V), das das Sitzschienensystem (S) nach einem der Ansprüche 1 bis 10 umfasst.

12. Verfahren zum Zusammenbauen von Teilen eines Sitzschienensystems (S) für ein Fahrzeug (V), wobei das Sitzschienensystem (S) eine obere Schiene (1) und eine unbewegliche untere Schiene (2) umfasst, die an einer Bodenstruktur (3) des Fahrzeugs (V) befestigbar ist, wobei die obere Schiene (1) dazu ausgestaltet ist, an einem Fahrzeugsitz (4) befestigt zu werden, wobei die obere Schiene (1) in Bezug auf die untere Schiene (2) in einer Fahrzeuglängsrichtung (D_{LO}) beweglich angeordnet ist, wobei das Sitzschienensystem (S) ferner ein längliches Lastelement (5) umfasst, das an der unteren Schiene (2) befestigt ist, wobei das längliche Lastelement (5) einen oberen Teil (5a) mit einem sich lateral erstreckenden oberen Flansch (6a) und einen oder mehrere untere Teile (5b) mit sich lateral erstreckenden unteren Flanschen (6b) umfasst, wobei eine untere Basisoberfläche (2b) der unteren Schiene (2) ein oder mehrere erste Keilelemente (2c) umfasst und eine obere Oberfläche (3c) der Bodenstruktur (3) ein oder mehrere entsprechende zweite Keilelemente (3d) umfasst, wobei das Verfahren die Schritte umfasst:
Anordnen der unteren Schiene (2) in Verbindung mit der Bodenstruktur (3) in einer Position, in der der eine oder die mehreren unteren Teile (5b) entsprechenden Öffnungen (3a) der Bodenstruktur (3) zugewandt sind, wobei die Öffnungen (3a) verjüngende Ausgestaltungen aufweisen;
Schieben der unteren Schiene (2) in einer Abwärtsrichtung hin zu der Bodenstruktur (3), um den einen oder die mehreren unteren Teile (5b) durch die entsprechenden Öffnungen (3a) der Bodenstruktur (3) zu positionieren, wobei die unteren Flansche (6b) sich unter einer unteren Oberfläche (3b) der Bodenstruktur (3) erstrecken;
Verschieben der unteren Schiene (2) in Bezug auf die Bodenstruktur (3) in der Fahrzeuglängsrichtung (D_{LO}), um eine Wechselwirkung zwischen dem einen oder den mehreren ersten Keilelementen (2c) und dem entsprechenden einen oder den entsprechenden mehreren zweiten Keilelementen (3d) bereitzustellen, wobei eine Klemmwirkung bei Wechselwirkung zwischen dem einen oder den mehreren ersten Keilelementen (2c) und dem entsprechenden einen oder den entsprechenden mehreren zweiten Keilelementen (3d) zwischen einem oder mehreren unteren Flanschen (6b) und der unteren Oberfläche (3b) in Verbindung mit verjüngenden Abschnitten (16a) der Öffnungen (3a) bereitgestellt wird.

13. Verfahren nach Anspruch 12,
**dadurch gekennzeichnet, dass** das Sitzschienensystem (S) ferner einen Befestigungsbügel (2d), der mit der unteren Schiene (2) verbunden ist, und ein Befestigungselement (3e) umfasst, das mit der Bodenstruktur (3) verbunden ist, wobei das Verfahren ferner die Schritte umfasst: Verbinden des Befestigungsbügels (2d) über ein Fixierungselement (15) mit dem Befestigungselement (3e), nachdem die untere Schiene (2) in Abwärtsrichtung hin zu der Bodenstruktur (3) geschoben wurde; und Verschieben der unteren Schiene (2) in Bezug auf die Bodenstruktur (3) in Fahrzeuglängsrichtung (D_{LO}) durch eine Wirkung von dem Fixierungselement (15), wobei die Verschiebebewegung der unteren Schiene (2) in Bezug auf die Bodenstruktur (3) das eine oder die mehreren ersten Keilelemente (2c) und das eine oder die mehreren entsprechenden zweiten Keilelemente (3d) in Kontakt miteinander positioniert, um die Klemmwirkung zwischen einem oder mehreren unteren Flanschen (6b) und der unteren Oberfläche (3b) bereitzustellen.

14. Verfahren nach Anspruch 12 oder 13,
**dadurch gekennzeichnet, dass** das Sitzschienensystem (S) ferner eine oder mehrere Verstärkungsplattenstrukturen (14) umfasst, die zwischen der unteren Oberfläche (3b) und einem oder mehreren der unteren Flansche (6b) angeordnet sind, wobei das Verfahren ferner den Schritt umfasst: Bereitstellen der Klemmwirkung zwischen einem oder mehreren unteren Flanschen (6b) und der unteren Oberfläche (3b) über die eine oder mehreren Verstärkungsplattenstrukturen (14).

## Revendications

1. Système de rail de siège (S) pour un véhicule (V), dans lequel le système de rail de siège (S) comprend un rail supérieur (1) et un rail inférieur fixe (2) pouvant être fixé à une structure de plancher (3) du véhicule (V), dans lequel le rail supérieur (1) est configuré pour être fixé à un siège de véhicule (4), dans lequel le rail supérieur (1) est agencé de manière mobile par rapport au rail inférieur (2) dans une direction longitudinale de véhicule (D_{LO}), dans lequel le système de rail de siège (S) comprend en outre un élément de charge allongé (5) fixé au rail inférieur (2), dans lequel une partie supérieure (5a) de l'élément de charge (5) s'étend dans une partie inférieure (1a) du rail supérieur (1),
**caractérisé en ce qu'**une ou plusieurs parties inférieures (5b) de l'élément de charge (5) s'étendent à travers la structure de plancher (3), dans lequel une surface de base inférieure (2b) du rail inférieur (2) comprend un ou plusieurs premiers éléments de coin (2c) et dans lequel une surface supérieure (3c) de la structure de plancher (3) comprend un ou plusieurs seconds éléments de coin correspondants (3d), dans lequel les un ou plusieurs premiers éléments de coin (2c) et les un ou plusieurs seconds éléments de coin correspondants (3d) sont configurés pour interagir les uns avec les autres afin d'établir une action de serrage entre les une ou plusieurs parties inférieures (5b) et une surface inférieure (3b) de la structure de plancher (3).

2. Système de rail de siège (S) selon la revendication 1,
**caractérisé en ce que** les une ou plusieurs parties inférieures (5b) de l'élément de charge (5) s'étendent à travers les ouvertures correspondantes (3a) de la structure de plancher (3), dans lequel les ouvertures (3a) présentent des configurations rétrécies.

3. Système de rail de siège (S) selon la revendication 1 ou 2,
**caractérisé en ce que** les un ou plusieurs premiers éléments de coin (2c) sont agencés sur des côtés latéralement opposés des une ou plusieurs parties inférieures (5b).

4. Système de rail de siège (S) selon une quelconque revendication précédente,
**caractérisé en ce que** les un ou plusieurs premiers éléments de coin (2c) s'étendent dans une direction vers le bas à partir de la surface de base inférieure (2b), et dans lequel les un ou plusieurs seconds éléments de coin correspondants (3d) s'étendent dans une direction vers le haut à partir de la surface supérieure (3c).

5. Système de rail de siège (S) selon une quelconque revendication précédente,
**caractérisé en ce que** les une ou plusieurs parties inférieures (5b) comprennent des rebords inférieurs s'étendant latéralement (6b), dans lequel les rebords inférieurs (6b) sont configurés pour établir l'action de serrage avec la surface inférieure (3b).

6. Système de rail de siège (S) selon la revendication 5,
**caractérisé en ce que** le système de rail de siège (S) comprend en outre une ou plusieurs structures de plaques de renfort (14) agencées entre la surface inférieure (3b) et une ou plusieurs des brides inférieures (6b), dans lequel les brides inférieures (6b) sont configurées pour établir l'action de serrage avec la surface inférieure (3b) via les une ou plusieurs structures de plaques de renfort (14).

7. Système de rail de siège (S) selon la revendication 6,
**caractérisé en ce que** les une ou plusieurs structures de plaques de renfort (14) comprennent une ou plusieurs sections de plaques inférieures (14a) agencées sous une ou plusieurs des brides inférieures (6b).

8. Système de rail de siège (S) selon une quelconque revendication précédente,
**caractérisé en ce que** le système de rail de siège (S) comprend en outre un support de montage (2d) relié au rail inférieur (2) et un élément de montage (3e) pouvant être relié à la structure de plancher (3), dans lequel le support de montage (2d) est fixé à l'élément de montage (3e) via un élément de fixation (15), dans lequel le support de montage (2d) et l'élément de montage (3e) sont configurés pour positionner les un ou plusieurs premiers éléments de coin (2c) et les un ou plusieurs seconds éléments de coin correspondants (3d) en contact les uns avec les autres pour établir l'action de serrage entre les une ou plusieurs parties inférieures (5b) et la surface inférieure (3b).

9. Système de rail de siège (S) selon une quelconque revendication précédente,
**caractérisé en ce que** la partie supérieure (5a) comprend une bride supérieure (6a) s'étendant latéralement, dans lequel la partie inférieure (1a) du rail supérieur (1) a une configuration transversale en forme de cloche formant une cavité (7), dans lequel la cavité (7) est configurée pour embrasser la bride supérieure (6a), dans lequel la bride supérieure (6a) est configurée pour être directement en prise avec la partie inférieure (1a) lors d'un événement d'impact de véhicule afin d'établir un chemin de charge à partir de la structure de plancher (3) au rail supérieur (1) via l'élément de charge (5).

10. Système de rail de siège (S) selon la revendication 9,
**caractérisé en ce que** le rail supérieur (1) comprend une première section latérale (8a) et une seconde section latérale (8b) reliées l'une à l'autre, dans lequel la cavité (7) est formée entre la première section latérale (8a) et la seconde section latérale (8b), dans lequel la première section latérale (8a) comprend une première bride latérale se projetant vers l'intérieur (9a) et la seconde section latérale (8b) comprend une seconde bride latérale se projetant vers l'intérieur (9b), dans lequel la première bride (9a) et la seconde bride (9b) sont configurées pour être en prise avec la bride supérieure (6a) lors de l'événement d'impact de véhicule.

11. Véhicule (V) comprenant le système de rail de siège (S) selon l'une quelconque des revendications 1 à 10.

12. Procédé d'assemblage de pièces d'un système de rail de siège (S) pour un véhicule (V), dans lequel le système de rail de siège (S) comprend un rail supérieur (1) et un rail inférieur fixe (2) pouvant être fixés à une structure de plancher (3) du véhicule (V), dans lequel le rail supérieur (1) est configuré pour être fixé à un siège de véhicule (4), dans lequel le rail supérieur (1) est agencé de manière mobile par rapport au rail inférieur (2) dans une direction longitudinale du véhicule (D_{LO}), dans lequel le système de rail de siège (S) comprend en outre un élément de charge allongé (5) fixé au rail inférieur (2), dans lequel l'élément de charge allongé (5) comprend une partie supérieure (5a) ayant une bride supérieure s'étendant latéralement (6a) et une ou plusieurs parties inférieures (5b) ayant des brides inférieures s'étendant latéralement (6b), dans lequel une surface de base inférieure (2b) du rail inférieur (2) comprend un ou plusieurs premiers éléments de coin (2c) et une surface supérieure (3c) de la structure de plancher (3) comprend un ou plusieurs seconds éléments de coin correspondants (3d), dans lequel le procédé comprend les étapes suivantes :
l'agencement du rail inférieur (2) en lien avec la structure de plancher (3) dans une position dans laquelle les une ou plusieurs parties inférieures (5b) font face aux ouvertures correspondantes (3a) de la structure de plancher (3), dans lequel les ouvertures (3a) présentent des configurations rétrécies ;
le fait de pousser le rail inférieur (2) vers le bas vers la structure de plancher (3) pour positionner les une ou plusieurs parties inférieures (5b) à travers les ouvertures correspondantes (3a) de la structure de plancher (3), dans lequel les brides inférieures (6b) s'étendent sous une surface inférieure (3b) de la structure de plancher (3) ;
le fait de faire coulisser le rail inférieur (2) par rapport à la structure de plancher (3) dans la direction longitudinale du véhicule (D_{LO}) pour établir une interaction entre les un ou plusieurs premiers éléments de coin (2c) et les un ou plusieurs seconds éléments de coin correspondants (3d), dans lequel lors de l'interaction entre les un ou plusieurs premiers éléments de coin (2c) et les un ou plusieurs seconds éléments de coin correspondants (3d), une action de serrage est établie entre une ou plusieurs brides inférieures (6b) et la surface inférieure (3b) en lien avec les sections étroites (16a) des ouvertures (3a) .

13. Procédé selon la revendication 12,
**caractérisé en ce que** le système de rail de siège (S) comprend en outre un support de montage (2d) relié au rail inférieur (2) et un élément de montage (3e) relié à la structure de plancher (3), dans lequel le procédé comprend en outre les étapes suivantes : le fait de relier le support de montage (2d) à l'élément de montage (3e) avec un élément de fixation (15) après avoir poussé le rail inférieur (2) vers le bas en direction de la structure de plancher (3) ; et le fait de faire coulisser le rail inférieur (2) par rapport à la structure de plancher (3) dans la direction longitudinale du véhicule (D_{LO}) grâce à l'action de l'élément de fixation (15), dans lequel le mouvement de coulissement du rail inférieur (2) par rapport à la structure de plancher (3) positionne les un ou plusieurs premiers éléments de coin (2c) et les un ou plusieurs seconds éléments de coin correspondants (3d) en contact les uns avec les autres pour établir l'action de serrage entre une ou plusieurs brides inférieures (6b) et le surface inférieure (3b).

14. Procédé selon la revendication 12 ou 13,
**caractérisé en ce que** le système de rail de siège (S) comprend en outre une ou plusieurs structures de plaques de renfort (14) agencées entre la surface inférieure (3b) et une ou plusieurs des brides inférieures (6b), dans lequel le procédé comprend en outre l'étape suivante : le fait d'établir l'action de serrage entre une ou plusieurs brides inférieures (6b) et la surface inférieure (3b) via les une ou plusieurs structures de plaques de renfort (14).
